(19) Europäisches Patentamt
European Patent Office
Office européen des brevets

(11) EP 0 684 067 B1

(12) EUROPEAN PATENT SPECIFICATION

(45) Date of publication and mention of the grant of the patent:
**12.12.2001 Bulletin 2001/50**

(51) Int Cl.[7]: **B01D 53/68**, B01D 53/14

(21) Application number: **95303553.2**

(22) Date of filing: **25.05.1995**

# (54) Process for treating acidic exhaust gas

Verfahren zur Behandlung von sauren Abgasen

Procédé de traitement de gaz d'échappement acide

(84) Designated Contracting States:
**DE FR GB**

(30) Priority: **26.05.1994 JP 11295694**

(43) Date of publication of application:
**29.11.1995 Bulletin 1995/48**

(73) Proprietors:
- **TAMA CHEMICALS CO., LTD.**
  **Tokyo (JP)**
- **KABUSHIKI KAISHA TOSHIBA**
  **Kawasaki-shi, Kanagawa-ken 210-8572 (JP)**

(72) Inventors:
- **Cho, Toshitsura**
  **Ohta-ku, Tokyo (JP)**
- **Ohyama, Ryuichi, c/o Kawasaki Laboratory**
  **Kawasaki-ku (JP)**
- **Kamata, Yutaka**
  **Ooita-shi, Ooita-ken (JP)**

(74) Representative: **Calamita, Roberto**
**Frank B. Dehn & Co.,**
**European Patent Attorneys,**
**179 Queen Victoria Street**
**London EC4V 4EL (GB)**

(56) References cited:
**EP-A- 0 224 348**
**DE-A- 3 145 779**
**US-A- 3 024 086**
**US-A- 3 966 877**
**US-A- 4 363 791**
**US-A- 4 973 456**

- **DATABASE WPI Section Ch, Week 8829 Derwent Publications Ltd., London, GB; Class E36, AN 88-202872 & JP-A-63 141 628 ( NIPPON PIONIX KK) , 14 June 1988**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 684 067 B1

## Description

This invention relates to a process for treating exhaust gas containing acidic components and, more particularly although not limited, to a process for treating exhaust gas containing a variety of acidic components, for example, fluorine and/or fluorine compounds including fluorine gas, hydrofluoric acid, fluosilicic acid and ammonium fluoride generated in the cleaning step for removal of oxide films spontaneously formed on the surface of wafers in the process for manufacturing semiconductors and hydrogen chloride, nitric acid, sulfuric acid and hydrogen peroxide used in the step for cleaning silicon wafers.

In the process for manufacturing semiconductors, for example, various acids used in a number of steps generate acidic gases. If such acidic gases contaminate the atmosphere inside a clean room, they will infiltrate into semiconductor devices to affect most adversely the product performance and lower the yield. Moreover, acidic gases corrode equipment in a clean room thereby causing contamination of the atmosphere with heavy metals and generation of particles and heavy metal ions also infiltrate into semiconductor devices and adversely affect the product performance.

In consequence, acidic gases generated in various steps in the process for manufacturing semiconductors are generally treated as follows to prevent them from contaminating the atmosphere inside a clean room: acidic gases are sucked into ventilation equipment such as a ventilation duct and led out of the clean room into absorption equipment such as a scrubber where the gases are absorbed in a gas-treating solution composed, for example, of water, an aqueous solution of caustic alkali such as caustic soda and caustic potash or an aqueous solution of alkaline earth metal hydroxides and a spent gas-treating solution discharged from the absorption equipment is treated with slaked lime, rendered harmless by such means as coagulation sedimentation, and discarded.

The aforementioned process for manufacturing semiconductors, for example, uses hydrofluoric acid, ammonium fluoride and the like in the cleaning step for removal of oxide films formed spontaneously on the surface of wafers and generates exhaust gas containing fluorine and/or fluorine compounds such as fluorine gas, hydrofluoric acid, fluosilicic acid and ammonium fluoride ($NH_4F$) as acidic components, that is, acidic exhaust gas containing fluorine. Extremely strict standards are set for disposal of this type of acidic exhaust gas containing fluorine in view of the harmful effects of fluorine and/or fluorine compounds on the environment and a general practice is to subject a waste liquid containing fluorine and/or fluorine compounds obtained by treating such exhaust gas containing fluorine to secondary treatment to convert said fluorine and/or fluorine compounds to calcium salts for subsequent separation and removal.

If the aforementioned acidic exhaust gas containing fluorine is sucked into ventilation equipment together with another exhaust gas, for example, gas containing ammonia, crystals precipitate inside the ventilation equipment and their removal requires much time and labor. Vapor of fluosilicic acid ($H_2SiF_6$) generated during treatment of wafers with hydrofluoric acid tends to undergo hydrolysis easily and, upon hydrolysis, precipitates crystals of silica inside ventilation equipment and removal of the silica crystals also requires much time and labor.

It is thus desirable to provide a system of ventilation equipment and absorption equipment such as a scrubber for acidic exhaust gas containing fluorine generated in the process for manufacturing semiconductors separately from other acidic exhaust gases and treat only acidic gas containing fluorine in a separate system. Acidic exhaust gas containing fluorine however, is usually generated at scattered sources and it is not practical to treat the gas by separate ventilation and absorption equipment on account of high capital cost for piping and the like.

It is conceivable to install absorption equipment such as a scrubber in a clean room, the very source of acidic exhaust gas containing fluorine, and treat the gas on site by absorbing its acidic components in a gas-treating solution. However, an aqueous solution of caustic alkali such as sodium hydroxide or an aqueous solution of an alkaline earth metal hydroxide is normally used as gas-treating solution in this type of absorption equipment and bringing of such solution into a clean room in the process for manufacturing semiconductors may entail a danger of contaminating semiconductor devices with alkali metals and alkaline earth metals. Hence, the process in question is considered unpractical and not adopted.

Besides, acidic exhaust gas containing fluorine introduced into a gas-treating solution composed of an aqueous solution of caustic alkali or an aqueous solution of an alkaline earth metal hydroxide in the absorption equipment forms fluorides of low solubility such as sodium fluoride and potassium fluoride in the gas-treating solution. These fluorides precipitate as crystals in the absorption equipment and block the passage for recycle of the gas-treating solution and the flow passage of a stream of acidic exhaust gas.

Several processes have been proposed for absorbing acidic exhaust gas containing fluorine in a gas-treating solution and treating a spent solution containing fluorine and/or fluorine compounds discharged from absorption equipment.

For example, the following processes are known: precipitation of fluorine and/or fluorine compounds in the waste liquid as calcium fluoride with lime or slaked lime as disclosed in Japan Kokai Tokkyo Koho No. Sho 61-220787 (1986); removal by adsorption on anionic ion exchange resins; removal by addition of aluminum compounds followed by adsoprtion on anionic ion exchange resins as disclosed in Japan Kokai Tokkyo Koho No. Sho 58-64181 (1983);

removal by metal ion-adsorbed iminodiacetic acid type chelate resins as disclosed in Japan Kokai Tokkyo Koho Nos. Sho 50-44649 (1975) and Sho 51-115058 (1976); removal by adsorption on metal ion-adsorbed aminoalkylenephosphoric acid type chelate resins as disclosed in Japan Kokai Tokkyo Koho No. Sho 57-107287 (1982); and addition of iron compounds, aluminum compounds, lanthanum compounds or zirconium compounds followed by treatment with chelate resins.

According to another process disclosed in Japan Kokai Tokkyo Koho No. Sho 61-192385 (1986), fluorine and/or fluorine compounds are adsorbed on an adsorbent for fluorine consisting of a specified hydrated metal oxide or hydrated metal fluoride supported on a resin matrix at or below pH 7, eluted with an alkaline solution, and a calcium salt is added to the elute to separate fluorine and/or fluorine compounds as calcium compounds.

The aforementioned processes, however, use an aqueous solution of caustic alkali such as sodium hydroxide as gas-treating solution to absorb the acidic components of acidic exhaust gas containing fluorine in absorption equipment and they are not able to solve the problems associated with the aforementioned treatment of acidic exhaust gas since the gas-treating solution in question cannot be takken into a clean room in the process for manufacturing semiconductors.

The present inventors have conducted extensive studies in search of a process for treating acidic exhaust gas which can easily and efficiently treat acidic exhaust gas containing acidic components such as fluorine and/or fluorine compounds including fluorine gas, hydrofluoric acid, fluosilicic acid and ammonium fluoride and hydrogen chloride, nitric acid, sulfuric acid and hydrogen peroxide under clean conditions without contamination of the environment and, as needed, may be taken into a clean room in the process for manufacturing semiconductors, found that the object can be accomplished by using an aqueous solution of specified quaternary ammonium compounds as gas-treating solution and completed this invention.

Accordingly, it is an object of this invention to provide a process for treating acidic exhaust gas which can treat easily and efficiently the acidic components of exhaust gas under clean conditions without contamination of the environment.

Another object of this invention is to provide a process for treaing acidic exhaust gas containing fluorine which can treat easily and efficiently acidic exhaust gas, in particular, exhaust gas containing fluorine and/or fluorine compounds such as fluorine gas, hydrofluoric acid, fluosilicic acid and ammonium fluoride as acidic components.

A further object of this invention is to provide a process for treating acidic exhaust gas which can be taken into a clean room in the process for manufacturing semiconductors and is particularly suitable for treatment of acidic exhaust gas generated in the process for manufacturing semiconductors.

Thus, in treatment of acidic exhaust gas by contact with an alkaline gas-treating solution for separation of its acidic components, this invention relates to a process for the treatment of acidic exhaust gas for the separation of its acidic components, the process comprising the steps of

(a) contacting an acidic exhaust gas with a gas-treating solution consisting essentially of an aqueous solution of quaternary ammonium compounds of general formula (1)

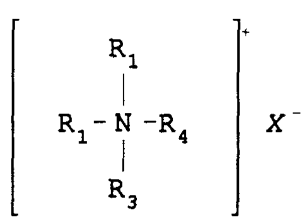

(1)

(wherein $R_1$ to $R_4$ are each an alkyl group with 1 to 3 carbon atoms or an hydroxyl-substituted alkyl group, said groups being identical with or different from one another, and X is $OH^-$ or % $CO_3^{2-}$) ;

(b) contacting the spent gas-treating solution containing absorbed acidic components from step (a) with calcium carbonate to effect precipitation of the acidic components as calcium salts thereof;

(c) separating said calcium salts; and

(d) recycling the gas-treating solution, after said separation of the calcium salts, to step (a).

Exhaust gas forming the object of treatment in the process of this invention is, for example, acidic exhaust gas containing fluorine and/or fluorine compounds including fluorine gas, hydrofluoric acid and fluosilicic acid, chlorine gas, hydrogen chloride, nitric acid, sulfuric acid, sulfurous acid, sulfuric anhydride, hydrogen peroxide and nitrogen dioxide as acidic components. Such acidic components may be present singly or as a mixture of two or more in exhaust gas.

In the cases where it is desirable to treat acidic exhaust gas containing fluorine and/or fluorine compounds such as fluorine gas, hydrofluoric acid, fluosilicic acid and ammonium fluoride generated in the cleaning step in the process for manufacturing semiconductors and fix fluorine atoms in exhaust gas for maximal and efficient separation of fluorine, acidic exhaust gas containing fluorine and/or fluorine compounds is preferably treated alone separately from acidic exhaust gases containing other acidic components. No difficulty arises when a small amount of ammonia gas discharged in the process for manufacturing semiconductors finds its way into the aforementioned acidic exhaust gas.

In the absorption step where exhaust gas containing the aforementioned acidic components is contacted with a gas-treating solution, an aqueous solution of quaternary ammonium compounds represented by the aforementioned general formula (1) is used as gas-treating solution.

Concrete examples of quaternary ammonium compounds are quaternary ammonium hydroxides such as tetramethylammonium hydroxide (TMAH), trimethylhydroxyethylammonium hydroxide (choline), methyltrihydroxyethy lammonium hydroxide, dimethyldihydroxyethylammonium hydroxide, tetraethylammonium hydroxide and trimethylethylammonium hydroxide and quaternary ammonium carbonates such as di(tetramethylammonium) carbonate (TMAC). Of these, TMAH, choline and TMAC are particularly desirable as they are of high product purity, easy to handle and inexpensive and there is a possibility of their use in a clean room as they have been used as developer in the manufacture of semiconductors.

The concentration of quaternary ammonium compounds to be used as gas-treating solution in the absorption step is not specified as long as it is sufficiently high to capture with certainty the acidic components in acidic exhaust gas during gas-liquid contact. From the viewpoint of ease of handling, the concentration is normally in the range of 0.01 to 30% by weight, preferably 10 to 25% by weight. With a gas-treating solution composed of an aqueous solution of 0.01% by weight or less of quaternary ammonium compounds, the rate of absorption of acidic exhaust gas becomes too low for satisfactory absorption of the acidic components. On the other hand, a concentration in excess of 30% by weight raises the viscosity of an aqueous solution of quaternary ammonium compounds to such an extent as to cause solidification and difficulty in absorption.

As for a process for contacting exhaust gas with the aforementioned gas-treating solution to effect absorption of acidic exhaust gas containing fluorine in the absorption step, a choice is made among known processes such as wet processes with the use of a scrubber of such type as packed column, plate column, Venturi, rotary and net spray and dry processes based on absorption of the acidic components of exhaust gas in a bag filter impregnated with a gas-treating solution. Of these processes, a packed column type scrubber is a simple apparatus of high efficiency requiring a small space for its installation and operation and is suitable for installation inside a clean room in the process for manufacturing semiconductors to capture acidic exhaust gas containing fluorine therein generated. The absorption equipment to be used in the absorption step may be of either batch or continuous type.

The extent of absorption of acidic gas in the gas-treating solution in the absorption step varies with the volume of gas-treating solution in use, the concentration of quaternary ammonium compounds and the method of contact. It is preferable to withdraw the gas-treating solution as spent solution when its pH reaches near the neutral value, preferably 7.1 to 8.0.

In the process of this invention, the spent gas-treating solution withdrawn from the aforementioned absorption step is contacted with calcium carbonate to precipitate the acidic components in the spent solution as calcium salts. When the scrubber or other absorption equipment is installed in a clean room in the process for manufacturing semiconductors, it is desirable to transfer the spent solution from the clean room to another site and contact the solution with calcium carbonate to precipitate the acidic components in the spent solution as calcium salts.

In the cases where the spent gas-treating solution withdrawn from the absorption step is contacted with calcium carbonate to precipitate the acidic components in the spent solution as calcium salts in the process of this invention, agitation of the spent solution and calcium carbonate is effected by a stirrer or by a static mixer on a batchwise or continuous basis.

After precipitation of fluorine and/or fluorine compounds in the spent gas-treating solution as calcium fluoride, the precipitates are separated in the following solid-liquid separation step. A process such as filtration, centrifugation and liquid cyclone may be adopted for the separation of the calcium salts in this step.

In the event that the calcium salt separated in the precipitation step is calcium fluoride, the salt is treated in the usual manner, for example, it is treated with concentrated sulfuric acid to recover hydrogen fluoride. The solution remaining after separation of the calcium salts in the precipitation step is a "used treating solution" and it could be disposed as waste, treated for regeneration or used in other applications. However, what remains after separation of

calcium salts by contact of fluorine and/or fluorine compounds in the spent gas-treating solution with calcium carbonate are quaternary ammonium carbonates, one of the components of gas-treating solutions of this invention. The recovered solution is recovered directly as gas-treating solution to the absorption step or is subjected to electrolysis to regenerate quaternary ammonium hydroxides for reuse depending upon the concentration of quaternary ammonium compounds.

According to the process of this invention, a gas-treating solution which is brought into contact with exhaust gas to absorb acidic exhaust gas containing fluorine in said exhaust gas has an extremely low vapor pressure and, besides, it is composed of an aqueous solution of quaternary ammonium compounds which are strong alkalis but, unlike alkali metals and alkaline earth metals, harmless to semiconductor devices and currently in use as developer in the developing step in the process for manufacturing semiconductors and at the same time possess excellent dissolving power against quaternary ammonium fluorides generated during absorption of acidic exhaust gas containing fluorine and also against silica formed by hydrolysis of fluosilicic acid. In consequence, it is possible to operate the absorption step for exhaust gas in a complete solution system with extreme ease of maintenance.

The separation of the acidic components of exhaust gas as calcium salts in the process of this invention can be considered theoretically to proceed according to the following reactions.

① In the case where the acid component in acidic exhaust gas is hydrogen fluoride and the quaternary ammonium compound represented by the general formula (1) is tetraalkylammonium hydroxide:

$$[R_4N]OH + HF \rightarrow [R_4N]F + H_2O$$

$$2\ [R_4N]F + CaCO_3 \rightarrow [R_4N]_2CO_3 + CaF_2$$

② In the case where the acid component in acidic exhaust gas is dihydrogen hexafluorosilicate and the quaternary ammonium compound represented by the general formula (1) is tetraalkylammonium hydroxide:

$$2\ [R_4N]OH + H_2SiF_6 \rightarrow [R_4N]_2SiF_6 + 2\ H_20$$

$$[R_4N]_2SiF_6 + CaCO_3 \rightarrow [R_4N]_2CO_3 + CaSiF_6$$

③ In the case where the acid component in acidic exhaust gas is hydrogen tetafluoroborate and the quaternary ammonium compound represented by the general formula (1) is tetraalkylammonium hydroxide:

$$[R_4N]OH + HBF_4 \rightarrow [R_4N]BF_4 + H_2O$$

$$2[R_4N]BF_4 + CaCO_3 \rightarrow [R_4N]_2CO_3 + Ca[BF_4]_2$$

④ In the case where the acid component in acidic exhaust gas is an acidic ion Y (Y is $Cl^-$ . $NO_3^-$ or 1/2 $SO_4^{2-}$ or a mixture thereof) and the quaternary ammonium compound represented by the general formula (1) is tetraalkylammonium hydroxide:

$$[R_4N]OH + HY \rightarrow [R_4N]Y + H_2O$$

$$2\ [R_4N]_2Y + CaCO_3 \rightarrow [R_4N]_2CO_3 + CaY_2$$

$$[R_4N]_2CO_3 + H_2O \rightarrow [R_4N]OH + H_2CO_3$$

According to the process of this invention, it is possible to treat acidic exhaust gas containing acidic components, particularly, fluorine and/or fluorine compounds easily and efficiently under clean conditions without contamination of the environment. Thus, the treating process of this invention can be practiced in a clean room in the process

for manufacturing semiconductors and is particularly suited for treatment of acidic exhaust gas containing fluorine and/or fluorine compounds generated in the process for manufacturing semiconductors.

This invention will be described in detail below with reference to the accompanying examples and comparative examples.

Example 1

Exhaust gas containing 3.8% of hydrogen fluoride was used as acidic exhaust gas and the gas was contacted with 1 $m^3$ of a 10% aqueous solution of TMAH in a packed column type scrubber with a capacity of 40 $m^3$/minute until the concentration of fluorine in the gas-treating solution reached 5%.

The pH of exhaust gas discharged from the scrubber was maintained at 7 during the operation and the concentration of fluorine in the discharged exhaust gas was 0.1 mg/liter or less as analyzed by the lanthanum alizarin complexon method or the removal of the hydrogen fluoride was roughly 100%.

Example 2

The spent gas-treating solution with the fluorine concentration of 5% after the treatment of acidic exhaust gas in Example 1 was transferred to a tank equipped with agitating blades, 170 kg of calcium carbonate with a purity of 99.5% and an average particle diameter of 2.2μm was added and the mixture was agitated for 2 hours.

Upon completion of the agitation, a slurry containing the precipitated crystals was introduced into a filtering tank equipped with filter cloth and filtered under gravity.

The recovered filtrate had a fluorine concentration of 2.1 mg/liter and it was composed of a colorless transparent 11% aqueous solution of TMAC while the solid recovered after the filtration was 140 kg of calcium fluoride mixed calcium carbonate.

Example 3

The treatment of acidic exhaust gas was carried out as in Example 1 except using the 11% aqueous TMAC solution recovered in Example 2 as gas-treating solution.

The pH of exhaust gas discharged from the scrubber was maintained at 7 during the operation and the concentration of fluorine in the exhaust gas was 0.1 mg/liter or less as analyzed by the lanthanum alizarin complexon method or the removal of the hydrogen fluoride was roughly 100%.

The spent gas-treating solution was treated as in Example 2. The recovered filtrate was a colorless transparent 11% aqueous solution of TMAC with a fluorine concentration of 2.7 mg/liter while the solid recovered after the filtration was 140 kg of calcium fluoride mixed with calcium carbonate.

Example 4

The treatment of acidic exhaust gas was carried out as in Example 1 except using exhaust gas containing 2.5% of dihydrogen hexafluorosilica te as acidic exhaust gas and stopping the absorption when the fluorine concentration in the gas-treating solution reached 3% and thereafter the operation was continued as in Example 2 except changing the amount of calcium carbonate to 50 kg.

The pH of exhaust gas discharged from the scrubber was maintained at 7 during the operation and the concentration of fluorine in the exhaust gas was 0.1 mg/liter or less as analyzed by the lanthanum alizarin complexon method or the removal of the hydrogen fluoride was roughly 100%.

The spent gas-treating solution was treated as in Example 2. The recovered filtrate was a colorless transparent 11% aqueous solution of TMAC with a fluorine concentration of 3.2 mg/liter while the solid recovered after the filtration was 70 kg of calcium fluoride mixed with calcium carbonate.

Example 5

The treatment of acidic exhaust gas was carried out as in Example 1 except using exhaust gas containing 0.1% of HF, 0.1% of $H_2SiF_6$, 0.05% of $HBF_4$, 0.1% of HCl, 0.1% of $HNO_3$, 0.1% of $H_2SO_4$ and 0.1% of $H_2O_2$ as acidic exhaust gas and stopping the operation when the concentration of fluorine in the gas-treating solution reached 3%.

The pH of exhaust gas discharged from the scrubber was maintained at 7 during the operation and the concentration of fluorine in the exhaust gas was 0.1 mg/liter or less as analyzed by the lanthanum alizarin complexon method or the removal of the hydrogen fluoride was roughly 100%.

Analysis of other acidic ions by ion chromatography indicates that $Cl^-$, $NO_3^-$ and $SO_4^{2-}$ are each present at

0.1 mg/liter or less and the removal of acidic ions was roughly 100%.

The recovered spent gas-treating solution was contacted with 100 kg of calcium carbonate and subjected to solid-liquid separation by filtration as in Example 2.

The recovered filtrate had a fluorine concentration of 2.5 mg/liter. The filtrate was a colorless transparent 11% aqueous solution of TMAC and it was electrolyzed to give a 10% aqueous solution of TMAH. The recovered solid was 150 kg of a mixture (water content 20%) of calcium carbonate, calcium fluoride, calcium fluosilicate, calcium fluoborate, calcium chloride, calcium nitrate and calcium sulfate.

Example 6

The treatment of acidic exhaust gas was carried out as in Example 1 except using exhaust gas containing 0.1% of HCl, 0.1% of $HNO_3$, 0.1% of $H_2SO_4$ and 0.1% of $H_2O_2$ as acidic exhaust gas and stopping the operation when the pH of the gas-treating solution reached 8.

The pH of exhaust gas discharged from the scrubber was maintained at 7 during the operation and analysis of acidic ions by ion chromatography indicated that $Cl^-$, $NO_3^-$ and $SO_4^{2-}$ are each present at 0.1 mg/liter or less and the removal of acidic ions was roughly 100%.

The recovered spent gas-treating solution was contacted with 100 kg of calcium carbonate and subjected to solid-liquid separation by filtration as in Example 2. The filtrate obtained was transferred to an electrolysis tank, electrolyzed and separated into a 10% aqueous solution of TMAH and an acidic waste liquid. The 10% aqueous solution of TMAH was utilized directly as gas-treating solution and the acidic waste liquid was adjusted for pH with a 10% aqueous solution of sodium hydroxide and discarded as waste.

Example 7

The treatment of acidic exhaust gas was carried out as in Example 1 except using exhaust gas containing inorganic components such as HF, $H_2SiF_6$, $HBF_4$, HCl, $NO_2$, $HNO_3$, $NH_3$, $PH_3$, $SO_2$, $SO_3$, $H_2SO_4$, $H_2S$, and $H_2O_2$ and organic components such as methanol, acetone, isopropanol, tetraethyl silicate, triethyl borate, trimethyl borate, trimethyl phosphate and trimethyl phosphite and stopping the operation when the concentration of fluorine in the gas-treating solution reached 3%.

The recovered spent gas-treating solution was treated as in Example 2 except changing the amount of calcium carbonate to 118 kg.

The pH of exhaust gas discharged from the scrubber was maintained at 7 during the operation and the recovered filtrate was colorless and transparent with a fluorine concentration of 2.2 mg/liter while 200 kg of solid (water content 20%) was recovered.

Example 8

The treatment of acidic exhaust gas was carried out as in Example 7 except replacing the alkaline solution in the scrubber with a 10% aqueous solution of choline.

The pH of exhaust gas discharged from the scrubber was maintained at 7 during the operation and the recovered filtrate was colorless and transparent with a fluorine concentration of 3.4 mg/liter while approximately 200 kg of solid (water content 20%) was recovered.

Example 9

The treatment of acidic exhaust gas was carried out as in Example 7 except using calcium carbonate with an average particle diameter of 5 mm.

The pH of exhaust gas discharged from the scrubber was maintained at 7 during the operation and the recovered filtrate was colorless and transparent with a fluorine concentration of 0.3 mg/liter while approximately 140 kg of solid (water content 20%) was recovered.

Comparative Example 1

The treatment of acidic exhaust gas was carried out as in Example 1 except using a 10% aqueous solution of caustic soda as gas-treating solution in the scrubber.

Precipitation of crystals occurred when the concentration of fluorine in the gas-treating solution reached 0.1% or so and it was not possible to continue the treatment thereafter.

Comparative Example 2

The treatment of acidic exhaust gas was carried out as in Example 4 except using a 10% aqueous solution of caustic potash as gas-treating solution in the scrubber.
Precipitation of crystals occurred when the concentration of fluorine in the gas-treating solution reached 0.1% or so and it was not possible to continue the treatment thereafter.

Comparative Example 3

The treatment of acidic exhaust gas was carried out as in Example 6 except replacing calcium carbonate with barium chloride. The concentration of fluorine in the recovered filtrate was 20 mg/liter.

Comparative Example 4

The treatment of acidic exhaust gas was carried out as in Example 6 except replacing calcium carbonate with calcium chloride. The particles formed were too fine to filter unless a coagulant was added. The filtrate obtained by filtration after addition of a coagulant contained fluorine at 15 mg/liter while the recovered solid (water content 40%) amounted to approximately 400 kg. This means that the recovered solid was too much for the fluorine content and the recovery of fluorine from the solid was made with low efficiency and difficulty.

Example 10

The packed column type scrubber with the capacity of 32 $m^3$/minute was filled with 300 liters of a 7.4% aqueous solution of TMAH (pH 9.20) as gas-treating solution, the solution was contacted with acidic exhaust gas containing approximately 180 mg/liter of hydrogen fluoride and, after passage of 9 and 12 hours, analysis was made of the pH of the gas-treating solution in the scrubber, the concentration of hydrogen fluoride in exhaust gas discharged from the scrubber and the percentage removal of hydrogen fluoride.
The pH of the gas-treating solution was 8.20, the concentration of hydrogen fluoride in exhuast gas was 0.03 mg/$m^3$ or less and the removal of hydrogen fluoride was 100% after 9 hours while they were respectively 5.30, 0.11 mg/$m^3$ and 99.9% after 12 hours.

Example 11

In the treatment of acidic exhaust gas carried out as in Example 10, the gas-treating solution was withdrawn as spent solution from the scrubber when the pH of the gas-treating solution reached 5.10. This spent solution contained 4.86 kg (as fluorine) of fluorine compounds.
The spent gas-treating solution withdrawn from the scrubber was transferred to the tank equipped with agitating blades, 12.8 kg of calcium carbonate with a purity of 99.5% and an average particle diameter of 2.2µm was added and the mixture was agitated for 2 hours.
Upon completion of the agitation, a slurry containing the precipitated crystals was introduced into the filtering tank equipped with filter cloth and filtered under suction.
The recovered filtrate had a fluorine concentration of 1,400 mg/liter and it was composed of a colorless transparent 7.2% aqueous solution of TMAC with 95.5% recovery of TMAC while the solid recovered after the filtration was 10.9 kg of calcium fluoride mixed with calcium carbonate.

Example 12

The packed column type scrubber used in Example 10 was filled with the 7.2% aqueous solution of TMAC (pH 9.80) recovered in Example 11 as gas-treating solution, the solution was contacted with acidic exhaust gas containing approximately 39 mg/$m^3$ of hydrogen fluoride and, after passage of 33 hours, analysis was made of the pH of the gas-treating solution in the scrubber, the concentration of hydrogen fluoride in exhaust gas discharged from the scrubber and the percentage removal of hydrogen fluoride.
The pH of the gas-treating solution was 8.50, the concentration of hydrogen fluoride in exhuast gas was 0.01 to 0.53 mg/$m^3$ and the removal of hydrogen fluoride was 99% or more.

Example 13

In the treatment of acidic exhaust gas carried out as in Example 12, the gas-treating solution was withdrawn

as spent solution from the scrubber when the pH of the gas-treating solution reached 5.10. This spent solution contained 2.88 kg (as fluorine) of fluorine compounds.

The spent gas-treating solution withdrawn from the scrubber was transferred to the tank equipped with agitating blades, 7.2 kg of calcium carbonate with a purity of 99.5% and an average particle diameter of 2.2 μm was added and the mixture was agitated for 2 hours.

Upon completion of the agitation, a slurry containing the precipitated crystals was introduced into the filtering tank equipped with filter cloth and filtered under suction.

The recovered filtrate had a fluorine concentration of 1,000 mg/liter and it was composed of a colorless transparent 6.0% aqueous solution of TMAC with 93.0% recovery of TMAC while the solid recovered after the filtration was 8.0 kg of calcium fluoride mixed with calcium carbonate.

Example 14

The packed column type scrubber used in Example 10 was filled with the 6.6% aqueous solution of TMAC (pH 9.82) recovered in Example 13 as gas-treating solution, the solution was contacted with acidic exhaust gas containing approximately 36 mg/$m^3$ of hydrogen fluoride and, after passage of 33 hours, analysis was made of the pH of the gas-treating solution in the scrubber, the concentration of hydrogen fluoride in exhaust gas discharged from the scrubber and the percentage removal of hydrogen fluoride.

The pH of the gas-treating solution was 4.30, the concentration of hydrogen fluoride in exhuast gas was 0.0067 to 0.053 mg/$m^3$ and the removal of hydrogen fluoride was 99% or more.

Example 15

The packed column type scrubber with the capacity of 32 $m^3$/minute was filled with 300 liters of a 7.4% aqueous solution of TMAH (ph 9.20) as gas-treating solution, the solution was contacted with acidic exhaust gas containing approximately 26 mg/$m^3$ of hydrogen fluoride and, after passage of 75 hours, analysis was made of the pH of the gas-treating solution in the scrubber, the concentration of hydrogen fluoride in exhaust gas discharged from the scrubber and the percentage removal of hydrogen fluoride.

The pH of the gas-treating solution was 7.89, the concentration of hydrogen fluoride in exhuast gas was 0.017 to 0.030 mg/$m^3$ and the removal of hydrogen fluoride was 99% or more.

Comparative Example 5

The treatment of acidic exhaust gas was carried out as in Example 10 except using water (pH 7.00) as gas-treating solution and, after passage of 1 hour and 12 hours, analysis was made of the pH of the gas-treating solution in the scrubber, the concentration of hydrogen fluoride in exhaust gas discharged from the scrubber and the percentage removal of hydrogen fluoride.

The pH of the gas-treating solution became 2.40 after 1 hour and 2.05 after 12 hours and the concentration of fluorine in exhaust gas was 1.84 mg/$m^3$ or less and the removal of hydrogen fluoride was 91.% after 12 hours.

## Claims

**1.** A process for the treatment of acidic exhaust gas for the separation of its acidic components, the process comprising the steps of

(a) contacting an acidic exhaust gas with a gas-treating solution consisting essentially of an aqueous solution of quaternary ammonium compounds of general formula (1)

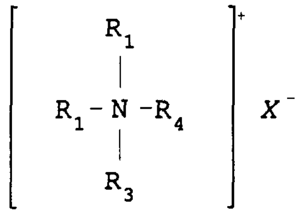

(1)

wherein $R_1$ to $R_4$ are each an alkyl group with 1 to 3 carbon atoms or an hydroxyl-substituted alkyl group, said groups being identical with or different from one another, and X is $OH^-$ or % $CO_3^{2-}$;

(b) contacting the spent gas-treating solution containing absorbed acidic components from step (a) with calcium carbonate to effect precipitation of the acidic components as calcium salts thereof;

(c) separating said calcium salts; and

(d) recycling the gas-treating solution, after said separation of the calcium salts, to step (a).

**2.** A process as claimed in claim 1 wherein the acidic components in said acidic exhaust gas are fluorine and/or fluorine compounds and said fluorine and/or fluorine compounds are separated as calcium fluoride.

**3.** A process as claimed in any one of the preceding claims wherein said exhaust gas is an acidic exhaust gas generated in the process for manufacturing semi-conductors and mainly composed of one kind or two or more kinds of compounds selected from fluorine gas, hydrofluoric acid, fluosilicic acid and ammonium fluoride.

**4.** A process as claimed in any one of the preceding claims wherein the concentration of quaternary ammonium compounds in the gas-treating solution is 0.01 to 30% by weight.

**5.** A process as claimed in any one of the preceding claims wherein the gas-treating solution is an aqueous solution of quaternary ammonium hydroxides.

**6.** A process as claimed in any one of the preceding claims wherein the gas-treating solution is an aqueous solution of tetramethylammonium hydroxide.

**7.** A process as claimed in any one of claims 1 to 4 wherein the gas-treating solution is an aqueous solution of quaternary ammonium carbonates.

**8.** A process as claimed in any one of the preceding claims wherein the concentration of quaternary ammonium compounds in the gas-treating solution is 10 to 25% by weight.

**Patentansprüche**

**1.** Verfahren für die Behandlung von Säureabgas für die Trennung seiner sauren Komponenten, wobei das Verfahren die folgenden Schritte aufweist:

(a) Kontaktieren eines Säureabgases mit einer Gasbehandlungslösung, die im wesentlichen aus einer wäßrigen Lösung von quaternären Ammoniumverbindungen mit der allgemeinen Formel (1) besteht

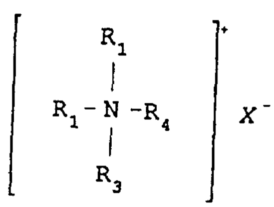

(1)

wobei $R_1$ bis $R_4$ jeweils eine Alkylgruppe mit 1 bis 3 Kohlenstoffatomen oder eine Hydroxyl-substituierte Alkylgruppe ist, wobei die Gruppen identisch miteinander oder unterschiedlich voneinander sind und X $OH^-$ oder ½ $CO_3^{2-}$ ist,

(b) Kontaktieren der Abfallgasbehandlungslösung, die die absorbierten Säurekomponenten aus Schritt (a) enthält, mit Kalziumcarbonat, um eine Ausfällung der Säurekomponenten als Kalziumsalze davon zu bewirken,

(c) Abtrennen der Kalziumsalze, und

(d) Rückführen der Gasbehandlungslösung nach der Abtrennung der Kalziumsalze zu Schritt (a).

**2.** Verfahren nach Anspruch 1, wobei die Säurekomponenten in dem Säureabgas Fluor und/oder Fluorverbindungen sind und das Fluor und/oder die Fluorverbindungen als Kalziumfluorid abgetrennt werden.

**3.** Verfahren nach einem der vorstehenden Ansprüche, wobei das Abgas ein Säureabgas ist, das in dem Verfahren zur Herstellung von Halbleitern erzeugt ist und hauptsächlich aus einer Art oder zwei oder mehr Arten von Verbindungen zusammengesetzt ist, die aus Fluorgas, Fluorwasserstoffsäure, Fluorkieselsäure und Ammoniumfluorid ausgewählt sind.

**4.** Verfahren nach einem der vorstehenden Ansprüche, wobei die Konzentration von quaternären Ammoniumverbindungen in der Gasbehandlungslösung 0,01 bis 30 Gewichts-% beträgt.

**5.** Verfahren nach einem der vorstehenden Ansprüche, wobei die Gasbehandlungslösung eine wäßrige Lösung von quaternären Ammoniumhydroxiden ist.

**6.** Verfahren nach einem der vorstehenden Ansprüche, wobei die Gasbehandlungslösung eine wäßrige Lösung von Tetramethylammoniumhydroxid ist.

**7.** Verfahren nach einem der Ansprüche 1 bis 4, wobei die Gasbehandlungslösung eine wäßrige Lösung von quaternären Ammoniumcarbonaten ist.

**8.** Verfahren nach einem der vorstehenden Ansprüche, wobei die Konzentration von quaternären Ammoniumverbindungen in der Gasbehandlungslösung 10 bis 25 Gewichts-% beträgt.

**Revendications**

**1.** Procédé de traitement d'un effluent gazeux acide pour la séparation de ses composants acides, le procédé comprenant les étapes consistant à

(a) mettre en contact un effluent gazeux acide avec une solution de traitement de gaz constituée essentiellement d'une solution aqueuse de composés ammonium quaternaire de formule générale (1)

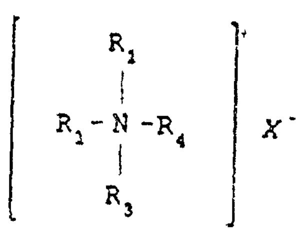 (1)

dans laquelle chacun des groupes $R_1$ à $R_4$ représente un groupe alkyle avec de 1 à 3 atomes de carbone ou un groupe alkyle hydroxylé, lesdits groupes étant identiques ou différents les uns des autres, et X est $OH^-$ ou 1/2 $CO_3^{2-}$;
(b) mettre en contact la solution de traitement de gaz ainsi utilisée, qui contient les composants acides absorbés provenant de l'étape (a) avec du carbonate de calcium, pour réaliser la précipitation des composants acides sous forme de leurs sels de calcium;

(c) séparer lesdits sels de calcium; et
(d) recycler la solution de traitement de gaz, suite à ladite séparation des sels de calcium, vers l'étape (a).

**2.** Procédé selon la revendication 1, dans lequel les composants acides dans ledit effluent gazeux acide sont le fluor et/ou des composés du fluor, et où ledit fluor et/ou lesdits composés du fluor sont séparés sous forme de fluorure de calcium.

**3.** Procédé selon l'une quelconque des revendications précédentes, dans lequel ledit eflfuent gazeux est un effluent gazeux acide produit dans le procédé de fabrication de semi-conducteurs et est principalement constitué d'un, de deux ou plusieurs types de composés, choisi(s) parmi le fluor gazeux, l'acide fluorhydrique, l'acide fluorosilicique et le fluorure d'ammonium.

**4.** Procédé selon l'une quelconque des revendications précédentes, dans lequel la concentration des composés ammoniums quaternaire dans la solution de traitement de gaz est de 0,01 à 30% en poids.

**5.** Procédé selon l'une quelconque des revendications précédentes, dans lequel la solution de traitement de gaz est une solution aqueuse d'hydroxyde d'ammonium quaternaire.

**6.** Procédé selon l'une quelconque des revendications précédentes, dans lequel la solution de traitement de gaz est une solution aqueuse d'hydroxyde de tétraméthylammonium.

**7.** Procédé selon l'une quelconque des revendications 1 à 4, dans lequel la solution de traitement de gaz est une solution aqueuse de carbonates d'ammonium quaternaire.

**8.** Procédé selon l'une quelconque des revendications précédentes, dans lequel la concentration des composés ammonium quaternaire dans la solution de traitement de gaz est de 10 à 25% en poids.